# EUROPÄISCHE PATENTSCHRIFT

(11) **EP 3 310 198 B1**
(45) Veröffentlichungstag und Bekanntmachung des Hinweises auf die Patenterteilung: **28.08.2019**
(21) Anmeldenummer: 16721808.0
(22) Anmeldetag: 10.05.2016
(51) Int. Cl.: A42B 3/30

(54) **SCHUTZHELM**
PROTECTIVE HELMET
CASQUE DE PROTECTION

(30) Priorität: 11.05.2015 DE 102015006111
(43) Veröffentlichungstag der Anmeldung: 25.04.2018
(73) Patentinhaber: Pfanner Schutzbekleidung GmbH, 6842 Koblach (AT)
(72) Erfinder: AUERBACH, Philipp, 9052 Niederteufen (CH)
(74) Vertreter: Schumacher & Willsau
(86) Internationale Anmeldenummer: PCT/EP2016/060435
(87) Internationale Veröffentlichungsnummer: WO 2016/180824

(56) Entgegenhaltungen:
- EP-A1- 0 618 751
- JP-A- 2004 173 018
- US-A- 6 104 816
- US-A1- 2010 223 706
- US-A1- 2012 084 084

## Beschreibung

Die Erfindung betrifft einen Schutzhelm.

Schutzhelme bestehen im Wesentlichen aus einer harten Helmschale, um einen Stoß oder einen Aufprall abzufangen und die Stoßrichtung umzulenken, sowie einem Tragkorb, um die bei einem solchen Stoß oder Aufprall in den Innenraum übertragene kinetische Aufprallenergie zu dämpfen und den Tragekomfort zu erhöhen. Ferner kann beispielsweise an der Helmschale ein Gehörschutz auf beiden Seiten angeordnet sein, der eine Reduzierung der Umgebungsgeräusche ermöglicht. Zusätzlich kann an einem solchen Helm ein Gesichtsschutz, beispielsweise in Form eines Gitters oder einer Kunststoffscheibe, vorgesehen sein. Häufig werden die Schutzhelme in lauten Umgebungen, beispielsweise bei Wald- oder Bauarbeiten, eingesetzt. In diesen Umgebungen ist das Kommunizieren mit anderen Personen aufgrund der Umgebungsgeräusche schwierig. Insbesondere bei Sägearbeiten, bei Waldarbeiten in weitläufigen Gebieten oder auf Baustellen von weitläufigen und/oder mehrstöckigen Gebäuden ist es hilfreich, wenn man ohne Sichtkontakt und außerhalb der Hörreichweite mit Mitarbeiten kommunizieren kann, um beispielsweise Anweisungen zu geben oder zu empfangen, Warnungen auszurufen oder Informationen auszutauschen.

Aus den Dokumenten EP 0 618 751 A1, US 6 104 816 A, US 2010/223706 A1 und JP 2004 173018 A sind verschiedene Kommunikationslösungen bekannt, die eine Kommunikation von Helmträgern betreffen. Insbesondere kommen dabei Körperschallmikrofone zum Einsatz.

Es ist eine Aufgabe der Erfindung, einen Schutzhelm anzugeben, der eine Kommunikation des Helmträgers mit anderen Personen verbessert.

Diese Aufgabe wird mit den Merkmalen des unabhängigen Anspruchs gelöst. Vorteilhafte Ausführungsformen der Erfindung sind in den abhängigen Ansprüchen angegeben.

Die Erfindung betrifft einen Schutzhelm mit einer Helmschale, einem Einbauraum, in dem eine Elektronikvorrichtung zur Kommunikation angeordnet ist, einem Tragkorb, der in einem Inneren der Helmschale angeordnet ist, und einem in oder an dem Tragkorb angeordneten Mikrofon, das einen Sensor zur elektronischen Erfassung von Schallwellen aufweist, wobei das Mikrofon einen Schallaufnehmer zur Aufnahme und Übertragung der Schallwellen an den Sensor umfasst, wobei der Schallaufnehmer dazu geeignet ist, die von einem Sprachorgan des Helmträgers erzeugten und die oberhalb des Kopfes des Helmträgers verlaufenden Schallwellen aufzunehmen, wobei das Mikrofon über eine Signalverbindung mit der Elektronikvorrichtung verbunden ist, um die aufgenommenen Schallwellen an die Elektronikvorrichtung als Signal zu senden, wobei der Einbauraum außen an der Helmschale angeordnet und von einem Gehäuse umgeben ist. Der erfindungsgemäße Schutzhelm erleichtert es einem Helmträger, beispielsweise durch Übertragung der Signale an andere Geräte über Funk, das gesprochene Wort an andere Personen auch in lauten Umgebungen zu übermitteln. Spricht die den Helm tragende Person, verlaufen Schallwellen über die Schädelknochen und treten so nicht nur aus dem Mund aus, sondern werden auch an anderen Stellen des Kopfes übertragen. Ein Großteil der Schallwellen verläuft dabei oberhalb des Kopfes, besonders etwa oberhalb der Wirbelsäule an der Schnittstelle, an der das Stirnbein und das Scheitelbein aufeinander treffen. Das Mikrofon ist vorzugsweise an dieser Stelle angeordnet, um eine möglichst gute Aufnahme der Schallwellen zu erzielen. Zur Anbindung an den Tragkorb ist eine lösbare Verbindung, insbesondere eine Klettverbindung, vorgesehen, so dass das Mikrofon an dem Tragkorb einfach nachgerüstet werden kann und bei Bedarf wieder von dem Tragkorb gelöst werden kann. Zur Befestigung des Mikrofons an dem Tragkorb kann auch eine Klebeverbindung vorgesehen sein. Die zur Befestigung verwendete Verbindung kann auch dazu dienen, weitere Schallwellen zu absorbieren, damit diese nicht von dem Mikrofon erfasst werden. Um eine sehr gute Absorption der von dem Tragkorb übertragenen Körperschallwellen zu erzielen, wird vorteilhaft eine besonders lose Klettverbindung eingesetzt. Die Helmschale besteht vorzugsweise aus einem harten Kunststoff, um einen guten Schutz des Helmträgers zu gewährleisten. Die Helmschale kann darüber hinaus Lüftungsschlitze aufweisen, um eine Lüftung des Kopfes des Helmträgers zu ermöglichen und so den Tragekomfort zu erhöhen. Der Tragkorb weist zur Anlage auf dem Kopf Tragstege auf, die von der Helmschale beabstandet angeordnet sind, so dass ein auf der Helmschale eintreffender Stoß nicht unmittelbar durch die Helmschale an die Kopffläche übertragen wird. Dabei besteht der Tragkorb vorzugsweise aus einem weichen Material, insbesondere aus einem Elastomer, um die Stoßenergie weiter zu dämpfen und den Tragekomfort zu erhöhen. Der Schallaufnehmer des Mikrofons weist vorzugsweise einen elliptischen, insbesondere einen kreisförmigen Querschnitt auf, wobei der Schallaufnehmer eine größere dem Kopf zugewandte Oberfläche als eine dem Kopf zugewandte Oberfläche des Sensors hat. Dadurch kann der Sensor vorzugsweise vergleichsweise klein ausgebildet werden, denn der Schallaufnehmer ist vorteilhaft in der Lage, einen Großteil der oberhalb des Kopfes verlaufenden Schallwellen aufzunehmen. Da der Schallaufnehmer vorzugsweise starr mit dem Sensor verbunden ist, werden die so angefachten Schwingungen des Schallaufnehmers an den Sensor weitergeleitet und dort aufgenommen. Der Querschnitt des Sensors kann eckig ausgebildet sein, er kann aber auch rund sein. Darüber hinaus befindet sich das Mikrofon durch die Anordnung an dem Tragkorb und über dem Kopf stets in einer idealen Position zur Aufnahme der Schallwellen. Anders als Mikrofone, die vor dem Mund der Person angeordnet werden und dort insbesondere durch einen länglichen, aber leicht in Vibration versetzbaren Arm gehalten werden, kommt es nicht zu störenden Vibrationen, insbesondere kommt es nicht zu einer Relativbewegung zwischen dem Mikrofon und dem Kopf aufgrund einer Kopfbewegung. Die Signalverbindung zwischen dem Mikrofon und der Elektronikvorrichtung kann eine elektrische Verbindung oder eine Funkverbindung sein. Bei der elektrischen Verbindung ist zwischen dem Mikrofon, insbesondere dem Sensor, und der Elektronikvorrichtung vorzugsweise ein elektrisches Kabel angeordnet, das zweckmäßig gegenüber anderen Schallquellen abgeschirmt ist, damit über das elektrische Kabel keine störenden Geräusche auf das Mikrofon übertragen werden. Durch die Anordnung des Einbauraums außen an der Helmschale, wobei dieser von einem Gehäuse umgeben ist, kann der Innenraum des Schutzhelms vorteilhaft nur von der Helmschale umgeben sein, so dass sich keine sich möglicherweise durch einen Stoß lösenden Komponenten in dem Schutzhelm unkontrolliert bewegen. Darüber hinaus wird durch das Gehäuse zweckmäßig ein Schutz für die Lautsprechervorrichtung und die Elektronikvorrichtung ausgebildet.

Vorzugsweise ist vorgesehen, dass der Sensor ein piezoelektrischer Sensor ist. Ein piezoelektrischer Sensor ermöglicht vorteilhaft eine sehr geringe Einbauhöhe des Mikrofons, so dass es komfortabel getragen werden kann. Alternativ kann der Sensor auch ein piezoresistiver, ein kapazitiver, ein elektromagnetischer, ein elektrodynamischer oder ein elektrostatischer Sensor sein.

Weiterhin kann der Schutzhelm dadurch weitergebildet sein, dass der Schallaufnehmer trichterförmig ausgebildet ist und der Sensor in einem zentralen Bereich des trichterförmigen Schallaufnehmers angeordnet ist. Durch die Anordnung des Sensors in dem zentralen Bereich werden die von dem Kopf ausgehenden Schallwellen vorteilhaft gleichmäßig an den Sensor übertragen. Dadurch, dass der Schallaufnehmer trichterförmig ist, insbesondere eine zu dem Kopf komplementäre Oberfläche aufweist, können die Schallwellen störungsfrei aufgenommen werden.

Der Schutzhelm kann darüber hinaus vorteilhaft so ausgebildet sein, dass der Schallaufnehmer eine der Kopfoberfläche des Kopfes zugewandte konkave Wölbung aufweist. Die Konkave Wölbung kann beispielsweise ein Paraboloid sein. Aufgrund des so ausgebildeten Parabolschallaufnehmers kann ein besonders breites Frequenzspektrum der Schallwellen aufgenommen werden. Darüber hinaus haben störende aus anderen Richtungen als der Öffnungsrichtung des Parabolschallaufnehmers eindringende Schallwellen einen weniger starken Einfluss auf die Schwingung des Schallaufnehmers.

Ferner kann vorgesehen sein, dass das Mikrofon einen Körperschalldämpfer zur Dämpfung von über den Tragkorb übertragenen Körperschallwellen aufweist. Der Körperschalldämpfer umgibt dabei das Mikrofon mit Ausnahme des Schallaufnehmers nach außen hin vorzugsweise vollständig, wobei der Körperschalldämpfer vorzugsweise eine Topf- oder Becherform aufweist. Innerhalb des Körperschalldämpfers sind dabei die übrigen Komponenten des Mikrofons angeordnet. Der Körperschalldämpfer kann aber auch Luftschallwellen zumindest teilweise absorbieren, ohne sie an den Sensor oder den Schallaufnehmer weiterzugeben, oder zumindest dämpfen. Der Körperschalldämpfer kann auch schlag- und/oder stoßdämpfende Eigenschaften aufweisen.

In einer bevorzugten Ausgestaltung des Schutzhelms ist vorgesehen, dass der Körperschalldämpfer einen Elastomer umfasst. Elastomere weisen eine für Festkörper hohe Elastizität auf. Dadurch eignen sie sich gut für die Absorption und/oder Dämpfung von Körperschallwellen, die beispielsweise über den Tragkorb an das Mikrofon übertragen werden.

Dabei kann insbesondere vorgesehen sein, dass der Elastomer Kautschuk ist. Kautschuk ist gut erhältlich und kostengünstig zu verarbeiten, weist aber dennoch sehr gute Schalldämpfungseigenschaften auf.

Darüber hinaus kann der Schutzhelm derart weitergebildet sein, dass alleine der Körperschalldämpfer das Mikrofon mit dem Tragkorb unmittelbar körperlich verbindet. Dadurch wird verhindert, dass Körperschallwellen von anderen Komponenten des Mikrofons aufgenommen und an den Sensor übertragen werden, wo diese Körperschallwellen, die insbesondere an Verbindungsstellen und dort auftretender Reibung zwischen Helmschale und an der Helmschale angeordneter Komponenten entstehen, Störgeräusche verursachen. Weitere potentiell störende Schallquellen, die durch diese Anordnung akustisch von dem Sensor getrennt werden, sind beispielsweise an dem Schutzhelm angeordnete Lautsprecher.

In einer bevorzugten Ausführungsform ist vorgesehen, dass der Körperschalldämpfer eine Auflagefläche aufweist, die zur Auflage des Mikrofons auf dem Kopf vorgesehen ist. Dadurch entsteht vorteilhaft eine nach außen luftdichte Kammer im Inneren des Mikrofons, in dem die übrigen Komponenten angeordnet werden können. Der beispielsweise zylindrisch ausgebildete Körperschalldämpfer kann an seiner Außenseite in eine kreisförmige, das heißt komplementär ausgebildete Öffnung in dem Tragkorb eingesetzt werden und so die vom Tragkorb übertragenen, störenden Körperschallwellen absorbieren.

Insbesondere kann vorgesehen sein, dass der Körperschalldämpfer topfförmig ausgebildet ist und eine dem Kopf zugewandte Öffnungsseite aufweist, wobei die Auflagefläche die Öffnungsseite umgibt und wobei der Schallaufnehmer in einem Inneren des Körperschalldämpfers an der Öffnungsseite angeordnet ist. Dadurch ist vorteilhaft sichergestellt, dass das gesamte Mikrofon mit Ausnahme des an der Öffnungsseite angeordneten Schallaufnehmers, eine Schalldämpfung erfährt. Gegenüber der Öffnungsseite ist aufgrund der Topfform eine obere Stirnwand ausgebildet, die sich vorteilhaft für eine Anlage und Befestigung an dem Tragkorb eignet.

Vorteilhaft ist der Schutzhelm dadurch verbessert, dass an dem Tragkorb zwischen dem Tragkorb und dem Kopf ein Polster angeordnet ist und wobei sich das Polster zumindest um die Auflagefläche des Mikrofons auf dem Kopf erstreckt. Das Polster dient so vorteilhaft dazu, nicht nur den Tragkorb zu polstern, sondern auch den Verbindungsbereich zwischen Auflagefläche des Mikrofons und der Kopfoberfläche schalldicht zu isolieren. Es kann auch vorgesehen sein, dass sich das Polster zwischen die Auflagefläche des Mikrofons und den Kopf erstreckt. Das Polster kann insbesondere vorteilhaft dazu dienen, dass eine vorhandene Kopfbehaarung, die aufgrund von Haarsträngen eine unterschiedliche Dichte aufweisen kann, luftdicht umgeben wird, so dass es zu einer luftdichten Anlage zwischen Mikrofon und Kopfoberfläche kommt. Ferner dient das Polster der Polsterung und erhöht damit den Tragkomfort des Schutzhelmes.

Weiterhin kann der Schutzhelm dadurch weitergebildet sein, dass das Mikrofon einen Luftschalldämpfer zur Dämpfung von über die Luft an das Mikrofon übertragenen Luftschallwellen aufweist. Es kann vorkommen, dass von dem Körperschalldämpfer nicht alle Schallwellen absorbiert werden. Durch einen Luftschalldämpfer, der beispielsweise ein sehr weiches und insbesondere leichtes Material umfasst und ferner eine hohe Porosität aufweisen kann, können insbesondere Luftschallwellen, also Schallwellen, die über die Luft an das Mikrofon übertragen werden, gedämpft werden. Der Luftschalldämpfer dämpft vorzugsweise nicht nur Luftschallwellen, sondern auch Körperschallwellen. Der Luftschalldämpfer kann auch schlag- und/oder stoßdämpfende Eigenschaften aufweisen.

Weiterhin kann der Luftschalldämpfer insbesondere dadurch weitergebildet sein, dass der Luftschalldämpfer Schaumstoff umfasst. Ein Schaumstoff kann leicht hergestellt und geformt werden, weist sehr gute Schalldämpfungseigenschaften auf und stellt daher ein ideales Material für einen Luftschalldämpfer dar. Die Porengrößen des Schaumstoffs liegen dabei vorteilhaft im Wellenlängenspektrum der zu absorbierenden Schallwellen.

Ergänzend oder alternativ kann vorgesehen sein, dass der Luftschalldämpfer eine zu dem Schallaufnehmer komplementär ausgebildete Haltefläche für den Schallaufnehmer aufweist. Durch die Anlage des Schallaufnehmers an der Haltefläche können bestimmte Frequenzbereiche und ungewünschte Vibrationen des Schallaufnehmers gedämpft werden. Ferner wird dadurch eine freie Schwingung des Schallaufnehmers in dem Mikrofon, zum Beispiel aufgrund von Stößen, vorteilhaft verhindert.

Der Schutzhelm kann darüber hinaus zweckmäßig so ausgebildet sein, dass die Signalverbindung eine elektrische Leitung ist. Eine elektrische Leitung hat gegenüber einer Funkverbindung den Vorteil, dass sie keine zusätzlichen Sender und Empfänger benötigt und günstig herstellbar ist. Die elektrische Leitung ist zumindest abschnittsweise als Kabel ausgebildet und weist vorzugsweise eine Kupferleitung in einer Gummischicht auf, wobei das Kabel zusätzlich von einem Dämpfer umgeben sein kann. Es kann vorgesehen sein, dass die elektrische Leitung an einer Innenseite der Helmschale verläuft und dort geführt ist, wobei für die Führung der elektrischen Leitung Führungsmittel, beispielsweise Ösen oder Klipse, vorgesehen sein können. Die Leitung kann auch eingeklebt sein. Insbesondere kann die elektrische Leitung mit der Elektronikvorrichtung durch eine Steckverbindung verbunden sein, wobei vorzugsweise eine Cinchverbindung vorgesehen ist. Ist der Einbauraum beweglich an einer Außenseite der Helmschale angeordnet, so kann vorgesehen sein, dass die elektrische Leitung abschnittsweise durch einen Schleifkontakt oder ein dehnbares Kabel gebildet wird, um der Bewegung folgen zu können.

Eine bevorzugte Weiterbildung der Ausführungsform mit der elektrischen Leitung und dem Luftschalldämpfer sieht vor, dass die elektrische Leitung zumindest abschnittsweise spiralförmig in dem Luftschalldämpfer verläuft. Dadurch erfolgt eine großflächige Anlage der elektrischen Leitung an dem Luftschalldämpfer, so dass die von der elektrischen Leitung übertragenen Körperschallwellen vorteilhaft gedämpft werden. Insbesondere wird eine Führung in dem Luftschalldämpfer mit zumindest einer vollständigen Windung der Spirale gewählt, so dass in dem elektrischen Leiter reflektierte Körperschallwellen gedämpft werden.

Dabei kann insbesondere vorgesehen sein, dass der Schallaufnehmer einen Kabelkanal umfasst und dass die elektrische Leitung zumindest abschnittsweise in dem Kabelkanal geführt ist. Auf diese Weise wird verhindert, dass die elektrische Leitung in dem Endbereich vor einem Erreichen des Sensors frei schwingt. Insbesondere wird dadurch verhindert, dass die elektrische Leitung mit einer anderen Frequenz als der Schallaufnehmer schwingt, wodurch sie in dem Sensor starke Störungen hervorrufen würde.

Der Schallaufnehmer kann besonders bevorzugt so ausgebildet sein, dass der Kabelkanal in dem Schallaufnehmer spiralförmig verläuft ist. Dadurch ist zwischen dem Schallaufnehmer und der elektrischen Leitung ein flächiger Kontaktbereich in dem Kabelkanal gebildet, so dass die übertragenen Körperschallwellen einen geringeren Einfluss auf die Auslenkung des Schallaufnehmers haben. Insbesondere kann so eine asymmetrische Schallübertragung auf den Schallaufnehmer verhindert oder zumindest reduziert werden. Der Kabelkanal kann an der Seite des Schallaufnehmers verlaufen, mit der der Schallaufnehmer an der Haltefläche des Luftschalldämpfers anliegt, so dass Schwingungen der elektrischen Leitung noch besser gedämpft werden.

Der Schutzhelm kann besonders bevorzugt so ausgebildet sein, dass ferner ein mit der Helmschale von außen verbundener Helmschalenaufsatz vorgesehen ist, der zumindest einen Teil des Gehäuses bildet. Der Helmschalenaufsatz kann nachträglich mit der Helmschale verbunden werden, so dass die Lautsprechervorrichtung und die Elektronikvorrichtung entweder zusammen mit dem Helmschalenaufsatz an der Helmschale befestigt werden können oder aber bereits an der Helmschale befestigt sind und aufgrund des lösbaren Helmschalenaufsatzes gut zugänglich sind, beispielsweise um eine Batterie auszutauschen. Der Helmschalenaufsatz kann eine Verbindungswand aufweisen und mit der Verbindungswand an der Helmschale befestigt sein. Ferner kann das Gehäuse die Verbindungswand des Helmschalenaufsatzes und die Helmschale umfassen, wobei die Verbindungswand vorteilhaft beweglich an dem übrigen Helmschalenaufsatz angeordnet und dort ebenfalls festlegbar ist. Darüber hinaus kann insbesondere vorgesehen sein, dass die Verbindungswand den Einbauraum zu der Helmschale hin abgrenzt. Ergänzend kann vorgesehen sein, dass die Verbindungswand des Helmschalenaufsatzes und die Helmschale gemeinsam Mittel zur Befestigung des Helmschalenaufsatzes an der Helmschale aufweisen. Die Mittel zur Befestigung können eine Steckverbindung zur kraftschlüssigen Verbindung und/oder eine Rastverbindung zur formschlüssigen Verbindung umfassen. In einer bevorzugten Ausführungsform kann der Helmschalenaufsatz auch Lüftungsschlitze, die in der Helmschale des Schutzhelms ausgebildet sind, durch ein Verschieben in einer vorgesehen Führung an der Helmschale öffnen und verschließen.

Es kann ferner vorgesehen sein, dass die Elektronikvorrichtung eine Platine, eine Signalverarbeitungseinheit, eine Spannungsquelle, einen Signalempfänger, einen Signalsender und/oder einen Signalverstärker umfasst. Die Platine ermöglicht es auf einfache Weise, eine geordnete Verbindung zwischen den elektronischen Komponenten der Elektronikvorrichtung sowie der Lautsprechervorrichtung herzustellen. Um die von dem Mikrofon oder dem Signalempfänger stammenden Signale zu verarbeiten, kann eine Signalverarbeitungseinheit, beispielsweise in der Form eines Mikrochips oder Prozessors, vorgesehen sein. Ferner können die eingehenden Signale durch einen Signalverstärker, beispielsweise einen Vorverstärker, an die von der Signalverarbeitungseinheit verarbeitbare Signalstärke, angepasst werden. Der Signalempfänger und der Signalsender sind beispielsweise Funkempfänger und Funksender, um über elektromagnetische Signale mit der Umwelt zu kommunizieren. Es kann sich aber auch um Infrarotempfänger und Infrarotsender handeln. Insbesondere kann es sich um Sender und Empfänger für ein Mobilnetz, für Radiofunk oder um Bluetooth- oder WLAN-fähige Sender und Empfänger handeln. Dadurch kann der Schutzhelm beispielsweise dazu verwendet werden, mit anderen Personen zu telefonieren, Radioprogramme zu empfangen oder mit einem Mobiltelefon, insbesondere einem Smartphone, zu kommunizieren. Insbesondere kann der Schutzhelm eine drahtlose Datenverbindung mit einem Mobiltelefon herstellen und so beispielsweise als Headset dienen. Der Schutzhelm kann auch durch eine App des Mobiltelefons bedient werden, wobei die App die Elektronikvorrichtung des Schutzhelm ein- und ausschalten kann, Einstellungen zur Lautstärke, einer Empfindlichkeit des Mikrofons oder einer Radiofrequenz vornehmen kann, oder Anpassungen der Elektronikvorrichtung an bestimmte Umgebungen vornehmen kann. Dabei können voreingestellte Profile für Lautstärke, Empfindlichkeit des Mikrofons und Frequenzprofile von der App abgerufen und an die Elektronikvorrichtung übertragen oder aufgrund eines Signals der App auf einem Speicher in der Elektronikvorrichtung abgerufen werden.

In einer vorteilhaften Weiterbildung des Schutzhelms ist vorgesehen, dass in dem Einbauraum eine Lautsprechervorrichtung zur Erzeugung von Luftschallwellen angeordnet ist, die zumindest einen ersten Lautsprecher umfasst, wobei ein Gehörschutz an der Helmschale befestigt ist, und dass zwischen dem Gehörschutz und der Lautsprechervorrichtung eine akustische Leitung vorgesehen ist, um die von dem Lautsprecher erzeugten Luftschallwellen zur akustischen Ausgabe in den Gehörschutz zu leiten. Auf diese Weise ist ein Schutzhelm geschaffen, der eine Lautsprechervorrichtung und eine akustische Ausgabe vereint, so dass insbesondere keine zusätzlichen Schläuche oder andere akustische Leitungen von außen an den Schutzhelm herangeführt werden müssen, um mit dem Helmträger zu kommunizieren. Darüber hinaus sind keine elektrischen Verbindungen mit dem Gehörschutz nötig, um eventuell dort angeordnete Lautsprecher zu versorgen. Ein bestehender Gehörschutz kann vorteilhaft fast unverändert übernommen werden, wobei nur minimale strukturelle Änderungen an dem Gehörschutz nötig sind, beispielsweise eine Bohrung für die akustische Leitung. Ferner ist es so vorteilhaft möglich, dass eine den Schutzhelm tragende Person von außen erreicht werden kann, selbst wenn sie den Gehörschutz aufgesetzt hat. Insbesondere kann vorgesehen sein, dass die Elektronikvorrichtung mit der Lautsprechervorrichtung elektronisch verbunden ist und an die Lautsprechereinheit elektronische Signale zur Umwandlung in Luftschallwellen sendet. Dadurch kann beispielsweise über eine Funkverbindung mit dem Helmträger kommuniziert werden. Der Gehörschutz kann dazu ausgebildet sein, von der Helmschale abgenommen zu werden. Der Gehörschutz kann auch dazu ausgebildet sein, nach hinten umgeklappt zu werden. Die akustische Leitung kann beispielsweise ein weicher Silikonschlauch sein, der insbesondere einen konstanten Innenquerschnitt aufweist, so dass er in die gewünschte Lage gebogen werden kann, während gleichzeitig eine möglichst laminare Strömung in der akustischen Leitung herrscht. Die akustische Leitung wird durch einen Durchgang, zum Beispiel eine Bohrung in den Gehörkapseln des Gehörschutzes, geführt und kann so zur akustischen Ausgabe von Luftschallwellen verwendet werden. In einer vorteilhaften Weiterbildung ist vorgesehen, dass eine Hauptausstrahlrichtung der von der Lautsprechervorrichtung erzeugten Schallwellen von dem zu schützenden Kopf weg weist. Dadurch werden keine Schallwellen oder nur ein geringer Anteil der von der Lautsprechervorrichtung erzeugten Schallwellen in Körperschallwellen umgewandelt, so dass eine Irritation des Helmträgers vermieden wird. Insbesondere wird so eine Rückkopplung durch das an dem Tragkorb angeordnete Mikrofon vermieden. Ferner ist auch die Körperschalldämpfung der von der Lautsprechervorrichtung ausgehenden Körperschallwellen leichter. Der Lautsprecher kann eine oder zwei Membranen aufweisen.

Weiterhin kann die Lautsprechervorrichtung so ausgebildet sein, dass die Lautsprechervorrichtung einen zweiten Lautsprecher umfasst und die beiden Lautsprecher durch einen Zwischenraum voneinander getrennt sind. Dadurch kann auf einfache Weise jede der beiden Gehörschutzkapseln des Gehörschutzes beschallt werden. Durch den Zwischenraum werden gegenseitige Störeinflüsse vermieden oder verringert. Der Zwischenraum kann eine akustische Dämpfung aufnehmen, um die Störeinflüsse weiter zu verringern. In dem Zwischenraum kann beispielsweise die Elektronikvorrichtung untergebracht.

Vorteilhaft ist vorgesehen, dass jeder Lautsprecher der Lautsprechervorrichtung eine Membran aufweist, deren Flächennormale parallel zu einer jeweiligen Tangente einer Kopffläche des Kopfes verläuft, so dass die Hauptausstrahlrichtung der von dem Lautsprecher erzeugten Schallwellen von dem Kopf weg weist. Dadurch werden keine Schallwellen oder nur ein geringer Anteil der von der Lautsprechervorrichtung erzeugten Schallwellen in Körperschallwellen umgewandelt, so dass eine Irritation des Helmträgers vermieden wird.

Ergänzend oder alternativ kann vorgesehen sein, dass jeder Lautsprecher der Lautsprechervorrichtung eine Membran aufweist, deren Flächennormalen außerhalb eines von dem Mikrofon eingenommen Raumes verlaufen. Dadurch wird vorteilhaft eine Rückkopplung durch das an dem Tragkorb angeordnete Mikrofon vermieden oder verringert, denn es wird nur noch ein kleiner Anteil der ausgehenden Schallwellen in die Richtung des Mikrofons übertragen. Ferner ist auch die Körperschalldämpfung der von der Lautsprechervorrichtung ausgehenden Körperschallwellen leichter.

Bevorzugt ist vorgesehen, dass jeder Lautsprecher der Lautsprechervorrichtung eine Membran aufweist, die den entsprechenden Lautsprecher in eine erste Kammer und eine zweite Kammer aufteilt und diese Kammern zueinander luftdicht abschließt, so dass eine akustische Rückkopplung vermieden wird. Bei der Membran kann es sich um eine der oben beschriebenen Membranen handeln.

Die Lautsprecher können derart ausgebildet sein, dass die erste Kammer einen Ausgang für die akustische Leitung aufweist und wobei die zweite Kammer luftdicht verschlossen ist. Dadurch kann vorteilhaft vermieden werden, dass die an die den Helm tragende Person gerichtete Kommunikation von der Außenwelt wahrnehmbar ist. Die rückwärtige, zweite Kammer ist dabei jeweils möglichst groß ausgebildet und kann in dem Einbauraum ein Mehrfaches des Raumes der den akustischen Ausgang aufweisenden ersten Kammer einnehmen. Dadurch werden die rückwärtig von der Membran erzeugten Luftschallwellen gut zerstreut und es wird vorteilhaft eine Rückkopplung zwischen den durch eine Membran getrennten Kammern vermieden.

Es zeigen:
- Figur 1: eine schematische Schnittansicht eines erfindungsgemäßen Schutzhelms von vorne;
- Figur 2: ein Ausführungsbeispiel eines erfindungsgemäßen Schutzhelms in einer Draufsicht;
- Figur 3: eine schematische Ansicht eines Tragkorbs eines erfindungsgemäßen Schutzhelms mit einem Mikrofon;
- Figur 4: einen detaillierter dargestellten Ausschnitt des in Figur 3 gezeigten Tragkorbs mit dem Mikrofon;
- Figur 5: eine schematische Darstellung eines ersten Ausführungsbeispiels eines akustischen Helmkommunikationssystem;
- Figur 6: eine schematische Darstellung eines zweiten Ausführungsbeispiels eines akustische Helmkommunikationssystem;
- Figur 7: eine schematische Darstellung eines dritten Ausführungsbeispiels eines akustischen Helmkommunikationssystem; und
- Figur 8: eine schematische Darstellung eines vierten Ausführungsbeispiels eines akustischen Helmkommunikationssystem.

Bei der nachfolgenden Beschreibung der Zeichnungen bezeichnen gleiche Bezugszeichen gleiche oder vergleichbare Komponenten.

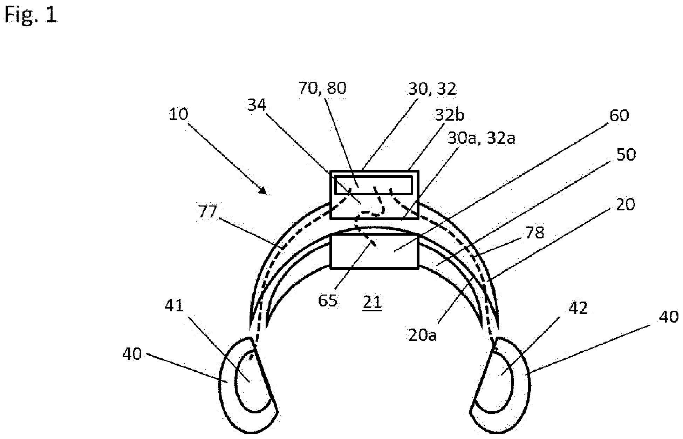

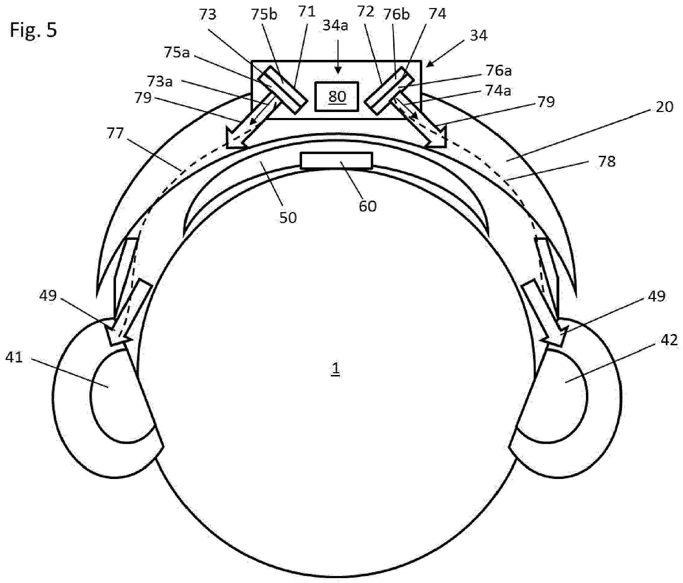

Um einen Überblick über das gesamte Helmkommunikationssystem zu geben, ist in Figur 1 ein Schutzhelm 10 mit einer Helmschale 20, einem an der Helmschale 20 befestigten Helmschalenaufsatz 30 und einem ebenfalls an der Helmschale 20 befestigten Gehörschutz 40 schematisch dargestellt. Der Helmschalenaufsatz 30 ist an der Außenseite der Helmschale 20 lösbar befestigt und bildet zusammen mit der Helmschale 20 ein Gehäuse 32 für einen zwischen der Helmschale 20 und dem Helmschalenaufsatz 30 angeordneten Einbauraum 34, wobei die Helmschale 20 eine Innenwand 32a des Gehäuses 32 bildet und der Helmschalenaufsatz 30 eine Außenwand 32b des Gehäuses bildet. Der Gehörschutz 40 umfasst eine rechte Gehörschutzkapsel 41 und eine linke Gehörschutzkapsel 42. In einem Innenraum 21 der Helmschale 20 weist der Schutzhelm 10 ferner einen Tragkorb 50 auf, der aus einem weicheren Material als die Helmschale 20 besteht, um den Tragekomfort des Schutzhelms zu verbessern und Stöße zu dämpfen. In dem Tragkorb 50 ist mittig ein Mikrofon 60 zur Aufnahme und Erfassung von Schallwellen vorgesehen. Das Mikrofon 60 kann insbesondere gesprochene Laute eines Trägers des Schutzhelms 10, deren Schallwellen oberhalb eines Kopfes 1 des Trägers verlaufen, erfassen. Der Kopf 1 ist der besseren Übersicht halber nur in den Figuren 5 bis 8 gezeigt. Die Position des Mikrofons 60 befindet sich dabei oberhalb einer Verbindungslinie zwischen Stirn- und Scheitelbein, da an dieser Position gesprochene Worte der den Schutzhelm 10 tragenden Person besonders deutlich erfasst werden können.

In dem Einbauraum 34 sind eine Lautsprechervorrichtung 70 sowie eine Elektronikvorrichtung 80 zur Kommunikation angeordnet. Die Lautsprechervorrichtung 70 wandelt von der Elektronikvorrichtung 80 gesendete elektrische Signale in akustische Signale zur Übertragung an den Gehörschutz 40 um. Zwischen der Lautsprechervorrichtung 70 und dem Gehörschutz 40, das heißt der rechten Gehörschutzkapsel 41 und der linken Gehörschutzkapsel 42, ist jeweils eine als Schlauch aus einem biegsamen Silikon ausgebildete akustische Leitung 77, 78 zur Übertragung der von der Lautsprechervorrichtung 70 erzeugten Luftschallwellen vorgesehen. Die so gebildete akustische Leitung weist entlang ihres Verlaufs einen konstanten Querschnitt auf, um das akustische Signal mit möglichst geringen Störeinflüssen zu belegen. Die in den Gehörschutzkapseln 41, 42 austretenden Schallwellen sind für eine den Schutzhelm 10 tragende Person gut hörbar. Die Lautsprechervorrichtung 70, die akustischen Leitungen 77, 78 und der Gehörschutz 40 bilden ein akustisches Helmkommunikationssystem zur Übertragung von Schallwellen an das Gehör der den Helm tragenden Person.

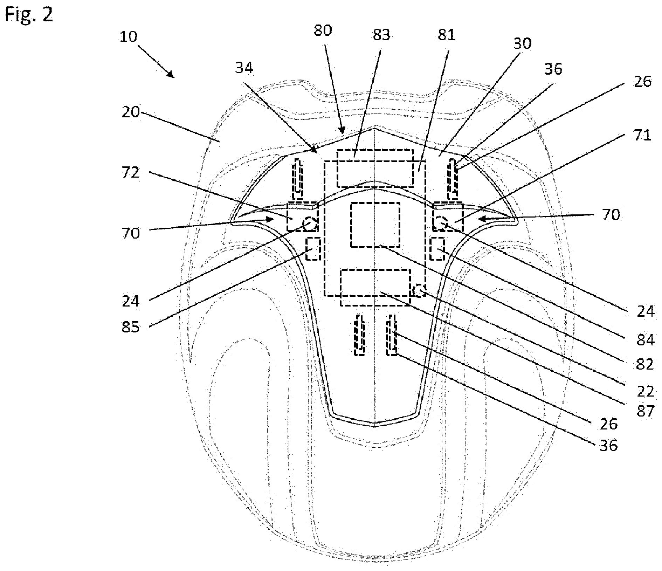

In Figur 2 ist ein Ausführungsbeispiel eines Schutzhelms 10 in einer Draufsicht gezeigt. Die Helmschale 20 ist mit einer gestrichelten Linie dargestellt, der Helmschalenaufsatz 30 ist mit einer durchgezogenen Linie gezeichnet. Die kleineren, mit gestrichelten Linien gezeichneten Elemente sind die einzelnen Komponenten der Lautsprechervorrichtung 70 und der Elektronikvorrichtung 80 sowie zur Festlegung des Helmschalenaufsatzes 30 an der Helmschale 20 vorgesehene Verbindungsmittel 26, 36. Die Verbindungsmittel 26, 36 sind von dem Helmschalenaufsatz 30 nach unten, das heißt in die Zeichnungsebene hinein ragende Rastarme 36 und in der Helmschale 20 ausgebildete Aufnahmeschlitze 26. Die Rastarme 36 können in die entsprechenden Aufnahmeschlitze 26 in der Helmschale 20 eingesteckt und eingerastet werden. So ist der Helmschalenaufsatz 30 an der Halmschale 20 festgelegt, und die Helmschale 20 und der Helmschalenaufsatz 30 bilden das Gehäuse 32 für den Einbauraum 34, in dem die Lautsprechervorrichtung 70 und die Elektronikvorrichtung 80 montiert sind. Die Lautsprechervorrichtung 70 und die Elektronikvorrichtung 80 sind an dem Helmschalenaufsatz 30 von unten montiert und festgelegt. Der Helmschalenaufsatz 30 ist in einem nichtbefestigten Zustand von unten frei zugänglich, um einen Einbau, Austausch oder eine Reparatur der Komponenten der Lautsprechervorrichtung 70 und der Elektronikvorrichtung 80 zu ermöglichen. Dadurch, dass der Helmschalenaufsatz 30 zusammen mit der Lautsprecher- und Elektronikvorrichtung 70, 80 an der Helmschale 20 montiert werden kann, kann ein bereits bestehender Schutzhelm auf einfache Weise nachgerüstet werden.

Die Lautsprechervorrichtung 70 besteht in dem vorliegenden Ausführungsbeispiel aus zwei seitlich in dem Einbauraum 34 eingebaute und räumlich voneinander getrennte Lautsprecher 71, 72. Die Lautsprecher 71, 72 sind mit stärkeren gestrichelten Linien schematisch dargestellt. Durch die voneinander räumlich getrennte Anordnung der Lautsprecher 71, 72 kann jeweils ein unabhängiges akustisches Signal für die linke Gehörschutzkapsel 41 und ein akustisches Signal für die rechte Gehörschutzkapsel 42 erzeugt werden. Zur Übertragung der durch die Lautsprechervorrichtung 70 erzeugten akustischen Signale und der durch die Elektronikvorrichtung 80 erzeugten oder empfangenen elektrischen Signale können bereits in der Helmschale 20 vorhandene Lüftungskanäle als Schlauchführungskanäle 22 beziehungsweise als ein Kabelführungskanal 24 verwendet werden. Durch die Schlauchführungskanäle 22 wird dabei die an die Lautsprechervorrichtung 70 angeschlossene akustische Leitung 77, 78 geführt, deren Ausgang in der entsprechenden Gehörschutzkapsel 41, 42 mündet. Eine von der Elektronikvorrichtung 80 zu dem Mikrofon 60 verlaufende Signalverbindung 65 ist durch den Kabelführungskanal 24 geführt. Die Signalverbindung 65 ist eine elektrische Leitung 65. Die akustischen und elektrischen Leitungen 77, 78, 65 sind zur übersichtlicheren Darstellung in Figur 1 gezeigt und in Figur 2 nicht dargestellt.

Die in Figur 2 gezeigte Elektronikvorrichtung 80 umfasst eine Vielzahl einzelner elektronischer Komponenten 81 bis 87, die ebenfalls mit stärkeren gestrichelten Linien schematisch dargestellt sind. In dem vorliegenden Ausführungsbeispiel umfasst die Elektronikvorrichtung 80 eine Platine 81 mit elektronischen Leiterbahnen zur leichteren Verbindung der übrigen elektronischen Komponenten und zur Vermeidung einer Vielzahl von Kabeln zwischen den elektronischen Komponenten, wodurch eine Reibung zwischen den Komponenten und den Kabeln vermieden wird und weniger Körperschallwellen entstehen. Sie umfasst ferner eine als Prozessor oder integrierter Schaltkreis ausgebildete Signalverarbeitungseinheit 82, einen als Spannungsquelle dienenden Akkumulator 83, einen als Funkempfänger 84 ausgebildeten Signalempfänger sowie einen als Funksender 85 ausgebildeten Signalsender, um mittels Funk mit der Umgebung, beispielsweise mit einem Mobilfunknetz oder mit Bluetooth fähigen Geräten, kommunizieren zu können. Zusätzlich ist ein Signalverstärker 87 auf der Platine 81 angeordnet, an den die elektrische Leitung 65 ausgeschlossen ist und der das an sich schwache elektrische Signal des Mikrofons 60 empfängt, verstärkt und an die Signalverarbeitungseinheit 82 weiterreicht.

Die Signalverarbeitungseinheit 82 und der Akkumulator 83 sind auf die Platine 81 aufgesteckt. Der Funkempfänger 84 und der Funksender 85 sind seitlich an der Platine 81 kabelgebunden angeordnet. Die von dem Funkempfänger 84 empfangenen Funksignale werden an die Signalverarbeitungseinheit 82 übertragen, wobei die Signalverarbeitungseinheit 82 mit den Lautsprechern 71, 72 und mit dem Mikrofon 60 über den Signalverstärker 87 elektronisch verbunden ist.

In einer abgewandelten Ausführungsform kann der Helmschalenaufsatz 30 nach unten hin eine weitere als Verbindungswand 30a ausgebildete Wand aufweisen, wobei die Verbindungsmittel 26 unterhalb, das heißt der Helmschale 20 zugewandt an der Verbindungswand 30a angeordnet sind. Die Verbindungswand 30a ist zur Verdeutlichung in der schematisch dargestellten Figur 1 eingezeichnet. In diesem Fall bildet der Helmschalenaufsatz 30 alleine das Gehäuse 32 für den Einbauraum 34, so dass alle Komponenten der Lautsprechervorrichtung 70 und der Elektronikvorrichtung 80 abgegrenzt und geschützt in dem das Gehäuse 32 bildenden Helmschalenaufsatz 30 angeordnet sind. In der Verbindungswand 30a sind entsprechend zu schon vorhandenen Durchgängen in der Helmschale 20 Öffnungen vorgesehen, so dass die Leitungen 43, 44, 65 in den Bereich unterhalb des Schutzhelms 10 geführt werden können.

In allen Fällen wird durch die Verbindungsmittel 26, 36 ein einfacher und sicherer Austausch von Helmschalenaufsätzen 30 ermöglicht, beispielsweise eines bereits vorhandenen Helmschalenaufsatzes ohne eine Lautsprecher- und Elektronikvorrichtung gegen einen Helmschalenaufsatz 30 mit der Lautsprecher- und Elektronikvorrichtung 70, 80. Es kann insbesondere vorgesehen sein, dass die akustischen Leitungen 77, 78 einfach von einer Innenseite 20a der Helmschale 20 aus in die Schlauchführungskanäle 24 gesteckt werden, wobei die Lautsprecher 71, 72 Lautsprecherausgänge aufweisen, die so platziert sind, dass von unten eingeführte Schläuche ohne zu knicken angeschlossen werden können.

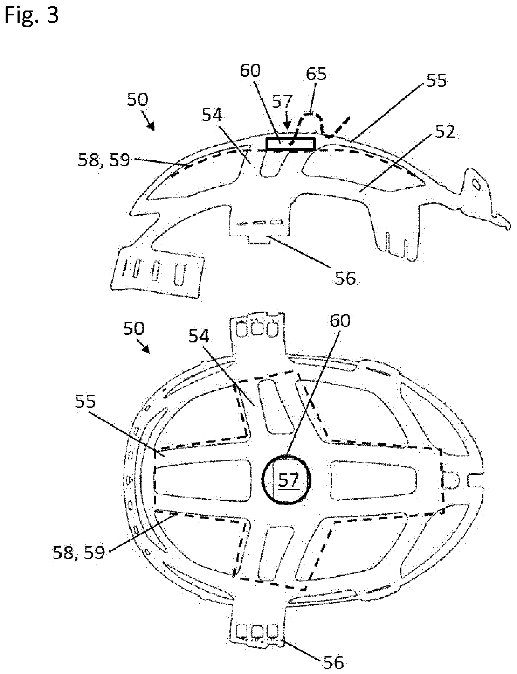

In Figur 3 ist ein Umriss eines Ausführungsbeispiels des Tragkorbs 50 in einer Seitenansicht und einer Draufsicht dargestellt, wobei an dem Tragkorb 50 das Mikrofon 60 angeordnet ist. Der Tragkorb weist dabei Haltestreben 52 zur Anlage an dem Kopf 1 des Helmträgers in Stirnhöhe und Tragestreben 54, 55 zur Auflage auf dem Kopf 1 des Trägers auf. Die Haltestreben 54, 55 umfassen jeweils zwei Querstreben 54 und zwei Längsstreben 55, die überkreuzt rautenförmig angeordnet sind. Das Mikrofon 60 ist an den Tragstreben 54, 55 von unten befestigt und ragt in den Innenraum des Tragkorbs 50 hinein. Zur Befestigung des Tragkorbs 50 an der Helmschale 20 sind Befestigungsmittel 56 in einem Seitenbereich des Schutzhelms 10 vorgesehen. Um die Auflage des Schutzhelmes 10 komfortabler zu gestalten, ist an der Innenseite des Tragkorbs ein Polster 58, 59 vorgesehen, dass unter den Tragestreben 54, 55 an Kopfoberfläche aufliegt. Das Mikrofon 60 ist zwischen den Tragestreben 54, 55 und dem Polster 58, 59 platziert, so dass die Auflage des Mikrofons 60 auf der Kopfoberfläche ebenfalls gepolstert ist. Da die Tragestreben 54, 55 rautenförmig angeordnet sind, kann das Mikrofon 60 teilweise in der Mitte des Tragkorbs 50 zwischen den einzelnen Tragstreben 54, 55 angeordnet werden, wobei die elektrische Leitung 65 nach oben durch eine mittlere Öffnung 57 verläuft.

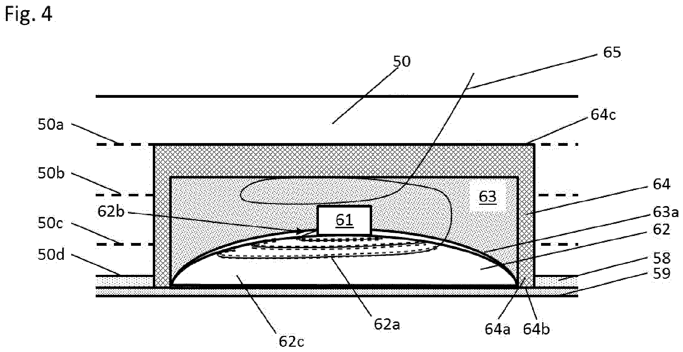

In Figur 4 ist eine detailliertere Darstellung der Anordnung des Mikrofons 60 an dem Tragkorb 50 gezeigt. Das Mikrofon 60 hat eine zylindrische Form. Das Mikrofon 60 umfasst einen piezoelektrischen Sensor 61, einen trichterförmigen mit einer dem Kopf zugewandten konkaven Wölbung versehenen Schallaufnehmer 62 und einen zur Aufnahme des Sensors 61 und des Schallaufnehmers 62 in dem Mikrofon angeordneten Luftschalldämpfer 63, der aus Schaumstoff besteht. Durch den Schaumstoff wird ein großer Teil der Luftschallwellen, die von außen das Mikrofon 60 erreichen, absorbiert. Ferner weist das Mikrofon 60 einen die übrigen Komponenten 61 bis 63 umgebenden topfförmigen Körperschalldämpfer 64 aus Kautschuk auf, der das Mikrofon 60 mit dem Tragkorb 50, insbesondere dessen Querstreben 54 und Längsstreben 55 verbindet. In dem vorliegenden Ausführungsbeispiel ist der Körperschalldämpfer 64 die einzige Komponente des Mikrofons 60, die mit dem Tragkorb unmittelbar körperlich verbunden ist, das heißt die übrigen Komponenten des Mikrofons 60 werden von den von dem Tragkörper 50 übertragenen Körperschallwellen abgeschirmt. Kautschuk ist ein Elastomer, der die von dem Tragkorb 50 an das Mikrofon 60 weitergeleiteten Körperschallwellen sehr gut absorbiert, ohne dass diese Schallwellen an den Schallaufnehmer 62 weitergereicht werden. Der Schallaufnehmer 62 weist einen mit einer gestrichelten Doppellinie gezeichneten Kabelkanal 62a auf, der sich spiralförmig von einem mittleren Bereich 62b nach außen hin umlaufend um den Schallaufnehmer 62 erstreckt. Der Kabelkanal 62a ist dabei an einer dem Luftschalldämpfer 63 zugewandten Außenseite 62c ausgebildet. In dem Kabelkanal 62a ist die von dem Sensor 61 ausgehende mit der Elektronikvorrichtung 80 verbundene elektrische Leitung 65 angeordnet, die in einem durch den Luftschalldämpfer 63 verlaufenden Abschnitt der elektrischen Leitung 65 in dem Luftschalldämpfer 63 in einem Außenbereich ebenfalls spiralförmig beziehungsweise annähernd schraubenförmig verläuft. Die elektrische Leitung 65 wird dabei bis an den Körperschalldämpfer 64 herangeführt und tritt durch diesen hindurch, verläuft an der Innenseite der Helmschale 20 bis zu dem Kabelführungskanal 24, tritt dort in den Einbauraum 34 ein und ist in dem Einbauraum 34 an die Elektronikvorrichtung 80 angeschlossen. Durch die schwimmende Lagerung der elektrischen Leitung 65 in dem Luftschalldämpfer 63 sowie die großflächige Anlage an dem Schallaufnehmer 62 werden ein Großteil der von dem Schutzhelm 10 über die elektrischen Leitung 65 übertragenen Körperschallwellen absorbiert, ohne den Sensor 61 zu erreichen. Auf diese Weise werden von dem Sensor 61 nur die gesprochenen Worte des Helmträgers erfasst.

Der Schallaufnehmer 62 besteht in dem vorliegenden Ausführungsbeispiel aus Holz, kann aber auch aus einem Kunststoff oder Metall hergestellt werden.

Zur Auflage des Mikrofons 60 auf dem Kopf 1 und zum Ausschluss von Luftschallwellen liegt das Mikrofon 60 mit einer Auflagefläche 64b an einem Überstand 64a des Körperschalldämpfers 64 sowie mit dem Schallaufnehmer 62 an dem Kopf 1 des Helmträgers an. In dem vorliegenden Ausführungsbeispiel ist die Auflagefläche 64b des Körperschalldämpfers 64 kreisringförmig ausgestaltet, wobei auch Kopfbehaarung zusammen gedrückt wird, so dass eine luftschalldichte Auflage des Mikrofons 60 auf dem Kopf 1 möglich ist. Dadurch werden Störgeräusche, die von außen an das Mikrofon 60 über den Kopf 1 oder die Luft an das Mikrofon herandringen, absorbiert, so dass der Sensor 61 störungsfrei arbeiten kann. Um eine Übertragung der Schallwellen des Helmträgers an den Schallaufnehmer 62 auf dem Kopf zu ermöglichen, sind die dem Kopf 1 zugewandten Ränder des Schallaufnehmer 62 planparallel zu der Auflagefläche 64b angeordnet, wobei die Form des Schallaufnehmers 62 an die Kopfform angepasst ist, was vorliegend zu der trichterförmigen Form des Schallaufnehmers 62 führt. Dadurch wird eine Anlage des Schallaufnehmers 62 an dem Kopf erleichtert, wobei eine durchschnittliche Kopfform zugrunde gelegt ist. Ferner weist der Luftschalldämpfer 63 eine Ausnehmung auf, die eine zu der trichterförmigen oberen Wandfläche beziehungsweise der Außenseite 62c des Schallaufnehmers 62 komplementäre Haltefläche 63a für den Schallaufnehmer 62 bildet, so dass der Schallaufnehmer 62 an dem Luftschalldämpfer 63 anliegen kann. Hierdurch wird erreicht, dass Störgeräusche von dem Luftschalldämpfer 63 absorbiert werden und eine insgesamt bessere Störgeräuschdämpfung erzielt wird.

Das an der Unterseite des Tragkorbs 50 angeordnete Polster 58, 59 ist ebenfalls zwischen dem Kopf 1 und der Auflagefläche 64b des Körperschalldämpfers 64 angeordnet beziehungsweise erstreckt sich dorthin und wird dort auch zusammengedrückt, um zu verhindern, dass Luftschallwellen von außen in den Innenraum und somit an den Sensor 61 des Mikrofons 60 gelangen.

Das Polster kann in mehrere Polsterbereiche 58, 59 unterteilt sein, wobei sich beispielsweise nur ein Innenpolster 59 unterhalb des Mikrofons 60 erstrecken kann.

Das Mikrofon 60 ist nicht zwingend in oder auf einer Höhe mit dem Tragkorb 50 angeordnet, sondern kann mit einer Oberseite 64c des Körperschalldämpfers 64 an einer Unterseite des Tragkorbs 50 befestigt sein. Hierzu kann beispielsweise eine Klebeverbindung oder ein Klettverschluss vorgesehen sein, um insbesondere eine lösbare Verbindung zwischen dem Mikrofon 60 und dem Tragkorb 50 zu schaffen. In Figur 4 sind unterschiedliche Anordnungspositionen 50a bis 50d der Oberseite 64c des Körperschalldämpfers 64 und damit des Mikrofons 60 eingezeichnet. Der Tragkorb 50 weist eine dementsprechende oder keine Ausnehmung zur Aufnahme und/oder Anlage des Mikrofons 60 auf.

In den im Folgenden beschriebenen Figuren 5 bis 8, die den Schutzhelm 10 jeweils in einer von vorne gesehenen Schnittansicht zeigen, werden unterschiedliche Ausführungsbeispiele akustischer Systeme an dem Schutzhelm 10 beschrieben, insbesondere die Anordnung von Lautsprechern 71, 72 der Lautsprechervorrichtung 70 in dem Einbauraum 34 in Relation zu der Anordnung des Mikrofons 60, aber auch die Übertragungswege der akustischen Signale von den Lautsprechern 71, 72 zu den Gehörschutzkapseln 41, 42. Jeder der Lautsprecher 71, 72 weist eine Membran 73, 74 auf, die eine Innenkammer 75, 76 von jedem der Lautsprecher 71, 72 in eine erste ausgangsseitige Kammer 75a, 76a und eine rückwärtige, zweite Kammer 75b, 76b unterteilt. Die beiden jeweiligen Kammern sind voneinander luftdicht durch die Membran 73, 74 getrennt. Die als Silikonschläuche ausgebildeten akustischen Leitungen 77, 78 sind durch zu den Schläuchen komplementär ausgebildete Ausgangsöffnungen aus den ausgangsseitigen Kammern 75a, 76a herausgeführt. Die Ausgangsöffnungen werden im Folgenden als akustische Ausgänge 79 bezeichnet. Es kann vorgesehen sein, dass die Schläuche von der Innenseite der Helmschale in eine dafür vorgesehene Steckaufnahme eingeführt werden können, um dort festgehalten zu werden. Der oder die akustischen Ausgänge 79 des oder der Lautsprecher 71, 72 und die akustischen Eingänge 49 der Gehörschutzkapseln 41, 42 sind schematisch als Pfeile dargestellt.

In Figur 5 sind die Lautsprecher 71, 72 in dem Einbauraum 34 angewinkelt eingebaut, so dass die Verlängerung einer Flächennormale 73a, 74a der jeweiligen Membran 73, 74 an dem Mikrofon 60 vorbeiführt. Zu Definitionszwecken der Flächennormalen wird eine Membran in Ruhe angenommen. Es hat sich gezeigt, dass eine solche Anordnung in dem Mikrofon 60 wesentlich geringere akustische Störungen verursacht als eine Anordnung der Lautsprecher 71, 72, bei der die Flächennormalen 73a, 74a der entsprechenden Membranen 73, 74 den eingenommenen Raum des Mikrofons 60 kreuzen. Diese Anordnung zeichnet sich sowohl durch eine geringe Störung des Mikrofons 60 als auch durch einen flachen Einbauraum 34 aus. Insbesondere wird eine Hauptausstrahlrichtung der Lautsprecher 71, 72 durch einen über sämtliche Flächennormale einer Membran 73, 74 gemittelten Richtungsvektor definiert, wobei insbesondere die Hauptausstrahlrichtung an dem von dem Mikrofon 60 eingenommenen Raum vorbeiführt. Der erste, rechte Lautsprecher 71 ist von dem zweiten, linken Lautsprecher 72 durch einen Zwischenraum 34a getrennt, in dem in dem vorliegenden Ausführungsbeispiel zumindest ein Teil der Elektronikvorrichtung 80 angeordnet ist. Durch den Zwischenraum 34a wird vorteilhaft vermieden, dass das Signal des rechten Lautsprechers 71 auch an die linke akustische Leitung 78, die ausgangsseitig an den linken Lautsprecher 72 angeschlossen ist, übertragen wird und dort eine Störung, beispielsweise einen Hall, verursacht und umgekehrt. Der Zwischenraum 34a kann beispielsweise zusätzliche durch einen weiteren Schalldämpfer ausgefüllt sein, um die gegenseitige Störung der beiden Lautsprecher weiter zu verringern.

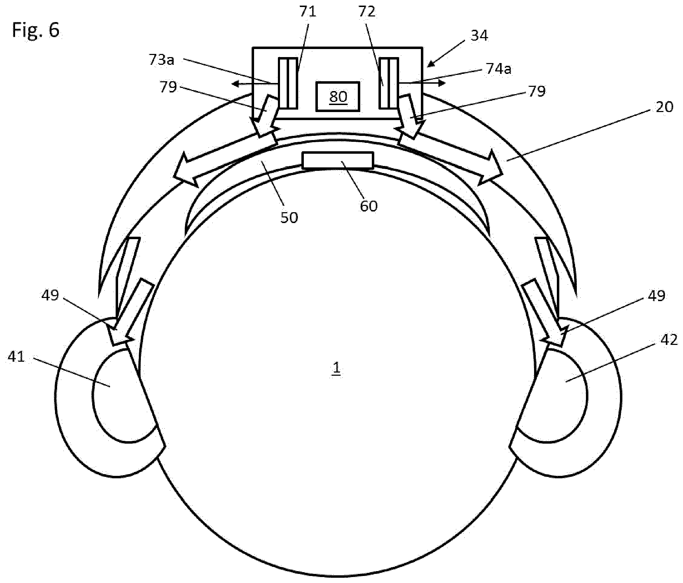

In dem in Figur 6 gezeigten zweiten Ausführungsbeispiel des akustischen Systems ist eine alternative Einbauweise der Lautsprecher 71, 72 dargestellt, wobei die Flächennormale 73a, 74a der jeweiligen Membranen 73, 74 entgegengesetzt nach außen weisen und parallel zu einer an einem Scheitelpunkt der Helmschale 20 anliegenden Tangente verlaufen. Diese Anordnung erzeugt die geringsten Störungen an dem Mikrofon 60.

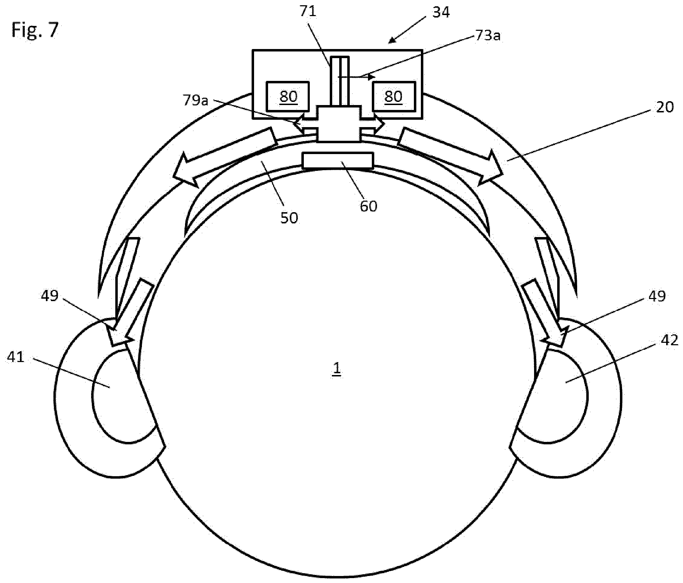

In Figur 7 ist ein drittes Ausführungsbeispiel eines akustischen Systems gezeigt, wobei nur ein einziger Lautsprecher 71 in dem Einbauraum 34 angeordnet ist. Die Membran 73 des Lautsprechers 71 weist eine Flächennormale 73a auf, die parallel zu einer an einem Scheitelpunkt der Helmschale 20 anliegenden Tangente verläuft. An die Ausgangsöffnung der ersten Kammer 75a ist ein akustisches Signalverzweigungselement 79a angebunden, das die von dem Lautsprecher erzeugten akustischen Signale aufteilt und jeweils über die akustischen Leitungen 77, 78 an die entsprechenden Gehörschutzkapseln 46, 47 leitet.

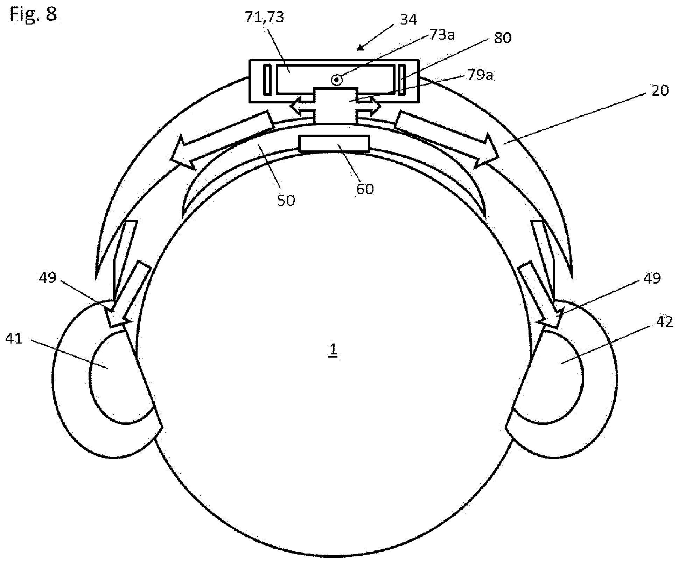

In Figur 8 ist eine weitere Ausführungsform des akustischen Systems gezeigt, in dem wiederum ein einziger erster Lautsprecher 71 dargestellt ist. Ein zweiter Lautsprecher (nicht gezeigt) kann in eine entgegengesetzte Richtung weisend hinter dem ersten Lautsprecher 71 angeordnet sein. Die Flächennormale 73a der Membran 73 des Lautsprechers 71 weist aus der Zeichnung heraus, was durch einen Kreis mit einem Punkt dargestellt ist. Die auf diese Weise nach vorne geleiteten Schallwellen werden durch die Ausgangsöffnung an ein akustisches Signalverzweigungselement 79 geleitet, welches die Schallwellen jeweils über die akustischen Leitungen 44, 45 an die jeweiligen Gehörschutzkapsel 46, 47 leiten.

In den Fällen mit zwei Lautsprechern 71, 72 können beide Lautsprecher 71, 72 eine Flächennormale 73a, 74a der Membran 73, 74 aufweisen, die nach vorne oder hinten weist oder die eine Richtungskomponente aufweist, die nach vorne oder hinten weist.

### Bezugszeichenliste

- 10: Schutzhelm
- 20: Helmschale
- 20a: Innenseite der Helmschale
- 21: Innenraum der Helmschale
- 22: Schlauchführungskanäle
- 24: Kabelführungskanäle
- 26: Aufnahmeschlitze, Verbindungsmittel
- 30: Helmschalenaufsatz
- 32: Gehäuse
- 32a: Innenwand des Gehäuses
- 32b: Außenwand des Gehäuses
- 34: Einbauraum
- 34a: Zwischenraum
- 36: Rastarme, Verbindungsmittel
- 40: Gehörschutz
- 41: rechte Gehörschutzkapsel
- 42: linke Gehörschutzkapsel
- 50: Tragkorb
- 50a: Anlagepositionen
- 50b: Anlagepositionen
- 50c: Anlagepositionen
- 50d: Anlagepositionen
- 52: Haltestreben
- 54: Querstreben
- 55: Längsstreben
- 56: Befestigungsmittel
- 57: mittlere Öffnung
- 58: Polsterbereich, Polster
- 59: Polsterbereich, Polster, Innenpolster
- 60: Mikrofon
- 61: Sensor
- 62: Schallaufnehmer
- 62a: Kabelkanal
- 62b: mittlerer Bereich
- 62c: Außenseite
- 63: Luftschalldämpfer
- 63a: Haltefläche
- 64: Körperschalldämpfer
- 64a: Überstand
- 64b: Auflagefläche
- 64c: Oberseite
- 65: elektrische Leitung, Signalverbindung
- 70: Lautsprechervorrichtung
- 71: rechter Lautsprecher
- 72: linker Lautsprecher
- 73: Membran
- 73a: Flächennormale
- 74: Membran
- 74a: Flächennormale
- 75: Innenkammer
- 75a: ausgangsseitige, erste Kammer
- 75b: rückwärtige, zweite Kammer
- 76: Innenkammer
- 76a: ausgangsseitige, erste Kammer
- 76b: rückwärtige, zweite Kammer
- 77: rechte akustische Leitung
- 78: linke akustische Leitung
- 79: akustischer Ausgang
- 79a: akustisches Signalverzweigungselement
- 80: Elektronikvorrichtung
- 81: Platine
- 82: Signalverarbeitungseinheit
- 83: Spannungsquelle, Akkumulator
- 84: Signalempfänger, Funkempfänger
- 85: Signalsender, Funksender
- 87: Signalverstärker

## Patentansprüche

1. Schutzhelm (10) mit
- einer Helmschale (20),
- einem Einbauraum (34), in dem eine Elektronikvorrichtung (80) zur Kommunikation angeordnet ist,
- einem Tragkorb (50), der in einem Innenraum (21) der Helmschale (20) angeordnet ist, und
- einem in oder an dem Tragkorb (50) angeordneten Mikrofon (60), das einen Sensor (61) zur elektronischen Erfassung von Schallwellen aufweist,
- wobei das Mikrofon (60) einen Schallaufnehmer (62) zur Aufnahme und Übertragung der Schallwellen an den Sensor (61) umfasst,
- wobei der Schallaufnehmer (62) dazu geeignet ist, die von einem Sprachorgan des Helmträgers erzeugten und die oberhalb des Kopfes (1) des Helmträgers verlaufenden Schallwellen aufzunehmen,
- wobei das Mikrofon (60) über eine Signalverbindung (65) mit der Elektronikvorrichtung (80) verbunden ist, um die aufgenommenen Schallwellen an die Elektronikvorrichtung (80) als Signal zu senden,
**dadurch gekennzeichnet, dass** der Einbauraum (34) außen an der Helmschale (20) angeordnet und von einem Gehäuse (32) umgeben ist.

2. Schutzhelm nach Anspruch 1, wobei der Sensor (61) ein piezoelektrischer Sensor ist.

3. Schutzhelm nach Anspruch 1 oder 2, wobei der Schallaufnehmer (62) trichterförmig ausgebildet ist und der Sensor (61) in einem zentralen Bereich (62b) des trichterförmigen Schallaufnehmers (62) angeordnet ist.

4. Schutzhelm nach einem der vorangehenden Ansprüche, wobei der Schallaufnehmer (62) eine der Kopfoberfläche des Kopfes (1) zugewandte konkave Wölbung aufweist.

5. Schutzhelm nach einem der vorangehenden Ansprüche, wobei das Mikrofon (60) einen Körperschalldämpfer (64) zur Dämpfung von über den Tragkorb (50) übertragenen Körperschallwellen aufweist.

6. Schutzhelm nach Anspruch 5, wobei alleine der Körperschalldämpfer (64) das Mikrofon (60) mit dem Tragkorb (50) unmittelbar körperlich verbindet.

7. Schutzhelm nach Anspruch 5 oder 6, wobei der Körperschalldämpfer (64) eine Auflagefläche (64b) aufweist, die zur Auflage des Mikrofons (60) auf dem Kopf vorgesehen ist.

8. Schutzhelm nach Anspruch 7, wobei der Körperschalldämpfer (64) topfförmig ausgebildet ist und eine dem Kopf zugewandte Öffnungsseite (64c) aufweist, wobei die Auflagefläche (64b) die Öffnungsseite (64c) umgibt und wobei der Schallaufnehmer (62) in einem Inneren des Körperschalldämpfers (64) an der Öffnungsseite (64c) angeordnet ist.

9. Schutzhelm nach Anspruch 7 oder 8, wobei an dem Tragkorb (50) zwischen dem Tragkorb (50) und dem Kopf (1) ein Polster (58, 59) angeordnet ist, wobei sich das Polster (58, 59) um die Auflagefläche (64b) des Mikrofons (60) auf dem Kopf (1) erstreckt.

10. Schutzhelm nach einem der vorangehenden Ansprüche, wobei das Mikrofon (60) einen Luftschalldämpfer (63) zur Dämpfung von über die Luft an das Mikrofon (60) übertragenen Luftschallwellen aufweist.

11. Schutzhelm nach Anspruch 10, wobei der Luftschalldämpfer (63) eine zu dem Schallaufnehmer (62) komplementär ausgebildete Haltefläche (63a) für den Schallaufnehmer (62) aufweist.

12. Schutzhelm nach einem der vorangehenden Ansprüche, wobei die Signalverbindung (65) eine elektrische Leitung ist.

13. Schutzhelm nach Anspruch 1, wobei ferner ein mit der Helmschale (20) von außen verbundener Helmschalenaufsatz (30) vorgesehen ist, der zumindest einen Teil des Gehäuses (32) bildet.

14. Schutzhelm nach einem der vorangehenden Ansprüche, wobei die Elektronikvorrichtung (80) eine Platine (81), eine Signalverarbeitungseinheit (82), eine Spannungsquelle (83), einen Signalempfänger (84), einen Signalsender (85) und/oder einen Signalverstärker (87) umfasst.

## Claims

1. A protective helmet (10) comprising
- a helmet shell (20),
- a fitting space (34) in which an electronic device (80) for communication is disposed,
- a supporting cage (50) disposed in an interior (21) of the helmet shell (20), and
- a microphone (60) disposed in or on the supporting cage (50) and comprising a sensor (61) for electronically detecting sound waves,
- wherein the microphone (60) comprises a sound receiver (62) for capturing and for transmitting the sound waves to the sensor (61),
- wherein the sound receiver (62) is capable of capturing the sound waves generated by an organ of speech of the wearer of the helmet and propagating above the head (1) of the wearer of the helmet,
- wherein the microphone (60) is connected to the electronic device (80) via a signal connection (65) to transmit the captured sound waves to the electronic device (80) as a signal,
**characterized in that** the fitting space (34) is disposed on the outside of the helmet shell (20) and enclosed by a housing (32).

2. The protective helmet according to claim 1, wherein the sensor (61) is a piezoelectric sensor.

3. The protective helmet according to claim 1 or 2, wherein the sound receiver (62) is designed so as to be funnel-shaped, and the sensor (61) is disposed in a central section (62b) of the funnel-shaped sound receiver (62).

4. The protective helmet according to one of the preceding claims, wherein the sound receiver (62) has a concave curvature facing the head surface of the head (1).

5. The protective helmet according to one of the preceding claims, wherein the microphone (60) comprises a structure-borne sound absorber (64) for suppressing structure-borne sound waves transmitted via the supporting cage (50).

6. The protective helmet according to one of the claims 5, wherein only the structure-borne sound absorber (64) directly physically connects the microphone (60) to the supporting cage (50).

7. The protective helmet according to one of the claims 5 or 6, wherein the structure-borne sound absorber (64) comprises a contact surface (64b) provided for the abutment of the microphone (60) on the head.

8. The protective helmet according to claim 7, wherein the structure-borne sound absorber (64) is designed so as to be cup-shaped and comprises an opening side (64c) facing the head, wherein the contact surface (64b) encloses the opening side (64c) and wherein the sound receiver (62) is disposed in an interior of the structure-borne sound absorber (64) on the opening side (64c).

9. The protective helmet according to claim 7 or 8, wherein a pad (58, 59) is disposed on the supporting cage (50) between the supporting cage (50) and the head (1), wherein the pad (58, 59) extends around the contact surface (64b) of the microphone (60) on the head (1).

10. The protective helmet according to one of the preceding claims, wherein the microphone (60) comprises an airborne sound absorber (63) for suppressing airborne sound waves transmitted to the microphone (60) through the air.

11. The protective helmet according to claim 10, wherein the airborne sound absorber (63) comprises a support surface (63a) for the sound receiver (62) formed so as to be complementary to the sound receiver (62).

12. The protective helmet according to one of the preceding claims, wherein the signal connection (65) is an electric line.

13. The protective helmet according to claim 1, wherein, further, a helmet shell attachment (30) connected to the helmet shell (20) from the outside is provided which forms at least part of the housing (32).

14. The protective helmet according to one of the preceding claims, wherein the electronic device (80) comprises a circuit board (81), a signal processing unit (82), a voltage source (83), a signal receiver (84), a signal transmitter (85) and/or a signal amplifier (87).

## Revendications

1. Casque de protection (10) avec
- une coque de casque (20),
- un espace de montage (34) dans lequel un dispositif électronique (80) de communication est disposé,
- une structure porteuse (50) disposée dans un espace intérieur (21) de la coque de casque (20), et
- un microphone (60) disposé dans ou au niveau de la structure porteuse (50) et présentant un capteur (61) pour l'enregistrement électronique des ondes acoustiques,
- le microphone (60) comprenant un capteur acoustique (62) pour l'enregistrement et la transmission des ondes acoustiques au capteur (61),
- le capteur acoustique (62) convenant à l'enregistrement des ondes acoustiques émises par un organe de la parole du porteur du casque et se diffusant au-dessus de la tête (1) du porteur de casque,
- le microphone (60) étant relié au dispositif électronique (80) par une connexion de signal (65) pour l'envoi des ondes acoustiques enregistrées au dispositif électronique (80) sous forme de signal,
**caractérisé en ce que** l'espace de montage (34) se trouve à l'extérieur au niveau de la coque de casque (20) et est entouré d'un boîtier (32).

2. Casque de protection selon la revendication 1, le capteur (61) étant un capteur piézoélectrique.

3. Casque de protection selon la revendication 1 ou 2, le capteur acoustique (62) étant en forme d'entonnoir et le capteur (61) étant disposé dans une zone centrale (62b) du capteur acoustique en forme d'entonnoir (62).

4. Casque de protection selon l'une des revendications précédentes, le capteur acoustique (62) présentant une courbure concave orientée vers une des surfaces de tête de la tête (1).

5. Casque de protection selon l'une des revendications précédentes, le microphone (60) présentant un amortisseur de bruit corporel (64) pour l'amortissement des ondes acoustiques corporelles transmises via la structure porteuse (50).

6. Casque de protection selon la revendication 5, l'amortisseur de bruit corporel (64) reliant seul et directement physiquement le microphone (60) et la structure porteuse (50).

7. Casque de protection selon la revendication 5 ou 6, l'amortisseur de bruit de structure (64) présentant une surface d'appui (64b) prévue pour l'appui du microphone (60) sur la tête.

8. Casque de protection selon la revendication 7, l'amortisseur de bruit corporel (64) étant en forme de pot et présentant un côté ouverture (64c) orienté vers la tête, la surface d'appui (64b) entourant le côté ouverture (64c) et le capteur acoustique (62) étant disposé à l'intérieur de l'amortisseur de bruit corporel (64) au niveau du côté ouverture (64c).

9. Casque de protection selon la revendication 7 ou 8, un rembourrage (58,59) étant disposé au niveau de la structure porteuse (50) entre la structure porteuse (50) et la tête (1), le rembourrage (58, 59) s'étendant autour de la surface d'appui (64b) du microphone (60) sur la tête (1).

10. Casque de protection selon l'une des revendications précédentes, le microphone (60) présentant un amortisseur de bruit aérien (63) pour l'amortissement des ondes acoustiques aériennes transmises au microphone (60) via l'air.

11. Casque de protection selon la revendication 10, l'amortisseur de bruit aérien (63) présentant une surface de support (63a) en complément du capteur acoustique (62) pour le capteur acoustique (62).

12. Casque de protection selon l'une des revendications précédentes, la connexion de signal (65) étant un câble électrique.

13. Casque de protection selon la revendication 1, une embase de coque de casque (30) reliée avec la coque de casque (20) par l'extérieur étant également prévue et formant au moins une partie du boîtier (32).

14. Casque de protection selon l'une des revendications précédentes, le dispositif électronique (80) comprenant un circuit imprimé (81), une unité de traitement de signal (82), une source de tension (83), un récepteur de signal (84), un émetteur de signal (85) et/ou un amplificateur de signal (87).
